Europäisches Patentamt

European Patent Office

Office européen des brevets

(11) Publication number: **0 232 607 B1**

# EUROPEAN PATENT SPECIFICATION

(45) Date of publication of patent specification: **19.02.92**   (51) Int. Cl.5: **A01K 63/04**, C02F 7/00

(21) Application number: **86309644.2**

(22) Date of filing: **10.12.86**

(54) **Method and apparatus for the treatment of water, especially for the oxygen enrichment of water.**

(30) Priority: **11.02.86 NO 860474**

(43) Date of publication of application:
**19.08.87 Bulletin 87/34**

(45) Publication of the grant of the patent:
**19.02.92 Bulletin 92/08**

(84) Designated Contracting States:
**AT BE CH DE ES FR GB GR IT LI LU NL SE**

(56) References cited:
WO-A-81/01700           DE-A- 2 638 489
DE-A- 2 951 464         FR-A- 2 368 990
NL-A- 7 702 473         US-A- 3 956 124
US-A- 4 116 164         US-A- 4 159 009

(73) Proprietor: **NORSK HYDRO A/S**
**Bygdoy Allé 2**
**N-0257 Oslo 2(NO)**

(72) Inventor: **Henriksen, Norolf**
**Rugdeveien 9**
**N-3670 Notodden(NO)**

(74) Representative: **Allen, Oliver John Richard et al**
**Lloyd Wise, Tregear & Co. Norman House**
**105-109 Strand**
**London, WC2R 0AE(GB)**

Rank Xerox (UK) Business Services

# EP 0 232 607 B1

**Description**

This invention relates to the treatment of liquids, especially oxygen enrichment of water which is utilised for aqua culture purposes such as fish breeding.

It is important for such purposes to have available clean water, rich in oxygen and of high quality. According to the prior art it has been conventional to bubble air through the water to keep the oxygen content within above 80-100% saturation. It has, however, recently been proved that it is advantageous to increase the oxygen content to a super-saturation of from 120-250%. This increases the growth rate substantially and also makes it possible to obtain a higher degree of utilisation of a given breeding volume. Instead of using air or an oxygen containing gas for enrichment of water, it is also conventional to use pure oxygen as this results in less contamination and greater effect.

It is also important that there is no super-saturation of nitrogen in the water. Already at 3-6% super-saturation there is a risk that the fish will suffocate. This can be critical, especially if heated water is utilised for fish breeding, as the amount of gas saturation in water will decrease with increasing temperature of the water.

Thus, it is as important to provide a low nitrogen content in the water and eventually reduce this through treatment of the water, as it is to have a sufficiently high content of oxygen.

From US Patent No. 4,116,164 it is known to enrich the oxygen content in water in a fish breeding reservoir by introducing gas, containing at least 25 per cent by volume of oxygen, into the water reservoir and where the gas is bubbled through and distributed into the water to maintain a total dissolved oxygen level of at least 120% super-saturation in relation to ambient pressure and temperature. This requires the use of an excess volume of gas. The amount which is not dispersed and dissolved in the water, will rise to the surface where it is collected. After purification and addition of fresh oxygen, the gas is returned to the water reservoir.

Such a method has, however, a number of drawbacks. The rising gas bubbles will create a form of ejector action and this will cause contamination due to uprising of excrements from the bottom. The lower specific gravity of the water in the area where the gas bubbles are rising, gives a decreased volume for utilisation, because fish and fish fry will avoid the area where the bubbles are rising. The amount of water available is often a critical factor, especially when there are restricted amounts of water for utilisation.

The present invention relates to an improved method for water treatment and oxygen enrichment without these drawbacks. Thus, it is the object of the invention to provide a method in which gas bubbles in the water reservoir are avoided and where there is freedom to treat fresh water and/or recirculated water for optimal temperature control and/or water renewal.

French Patent No. 2368990 describes a process for oxygen enrichment of water, in one embodiment of which, the water to be treated is sucked up into a supply pipe in which it is mixed with pressurised liquid oxygen. The liquid oxygen is delivered at high speed and, on mixing, divides into microscopic droplets which, due to the temperature and pressure differences between the liquid oxygen and the water, vaporise to form a small bubbles. The mixture is passed into a pressure vessel and undissolved gas rises to the headspace above the liquid mixture from whence it can be collected. The gas-enriched liquid is returned into the mass of water to be treated. The advantages of the arrangement are said to be firstly, better mixing of gas and water than when gas is simply introduced into the body of water to be treated, especially when the water is stagnant, secondly, better solubility of the gas in the water due to the fact that the gas can be pressurised to above atmospheric pressure and thirdly the enriched water can be returned to any desired location in the mass of water to be treated.

A method for the treatment of liquids, especially oxygen enrichment of water, in accordance with the invention in which gaseous oxygen is added to the water to give a super-saturation of between 120 to at least 250%, the water being treated with circulating gaseous oxygen, a gas mixture comprising an excess portion of the oxygen not enriched into the water and gaseous contaminants released from the water being collected after treatment of the water and being recirculated for treatment of additional water to be enriched is characterised by the steps of simultaneously pumping fresh water and/or recirculated water and an excess of gas consisting substantially or wholly of oxygen through an oxygen enrichment or reactor zone and mixing the water and oxygen therein to form a turbulent foaming gas-liquid flow and thus enriching the water with a portion of the oxygen, pumping the gas-liquid flow from the enrichment zone into a gas-liquid separation zone and therein separating the oxygen enriched water from the gas mixture including an excess portion of the oxygen and gaseous contaminants released from the water, releasing at least a portion of the gaseous contaminants from the gas mixture and recirculating the remaining gas mixture back to the enrichment zone, and, discharging the super-saturated, oxygen-enriched water from the separation zone to a position of utilisation in a breeding vessel or pond.

2

The invention further provides an apparatus for enriching water with oxygen to increase the oxygen content of the water to a super saturation of at least 120 - 250% which comprises means for mixing a gas consisting substantially or wholly of oxygen and water to be enriched, means for collecting a gas mixture comprising excess oxygen not enriched into the water and gaseous contaminants released from the water and means for recirculating the gas mixture for mixing with additional water to be enriched, characterised in that the mixing means comprises means for simultaneously pumping water to be enriched with oxygen and an excess of oxygen into an oxygen enrichment means and therein mixing the water and oxygen to form a turbulent, foaming gas-liquid flow and thus enrich the water, gas-liquid separator means for receiving the gas-liquid flow from the mixing means and for separating the oxygen enriched water from the gas mixture, means for releasing at least a portion of the gaseous contaminants from the gas mixture and means for discharging the oxygen enriched water from the separator means to a position of utilization.

The invention enables a high degree of supersaturation of the treated water, whilst at the same time, keeping the amount of nitrogen and other pollutions of the water at a low level.

The ability of the water to absorb gas will increase propotionally with the increase of the water pressure.

The invention allows for oxygen addition with a water pressure of several atmosphere, such that one has nearly complete freedom to choose the amount of oxygen super-saturation of the circulating water up to several hundred per cent.

The invention will now be further described by way of example with reference to the accompanying drawings in which:

Figure 1 is a schematic flow diagram illustrating a treatment unit in accordance with the invention.

Figure 2 is a diagram similar to figure 1 but with a purification unit added.

Figure 3 is a diagram of a central treating unit intended to supply oxygen-enriched water to a great number of smaller breeding containers or vessels, and

Figure 4 illustrates a preferred dual-stage system.

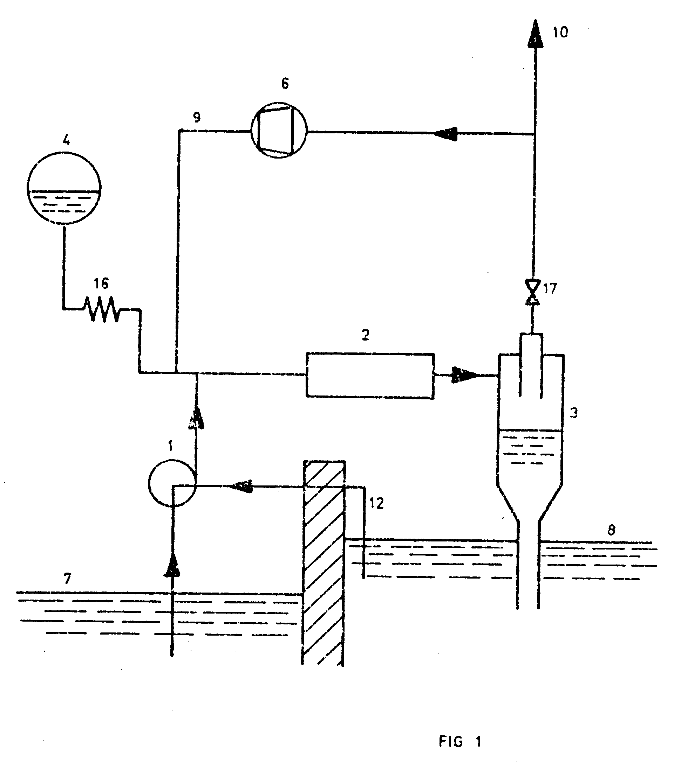

Referring to Figure 1 a pump 1 takes water from a fresh water source 7 and/or from a breeding pond 8.

The stream of water is mixed with a stream of pure oxygen which is introduced from an oxygen tank 4 containing liquid oxygen. The liquid oxygen is passed through an evaporator 16 in a flow system forming a recirculation circuit. This consists of pipelines 9, an oxygen enrichment means 2, where water and oxygen are mixed together to form a turbulent, foaming gas/liquid flow, and a gas/liquid separator 3, where gas and liquid are separated. The gas mixture from the separator which now in addition to oxygen also may contain other contaminants like nitrogen and carbon dioxide, is recirculated by means of a compressor 6. To prevent the building up of greater amounts of nitrogen gas and other contaminants, there is provided an outlet 10, hereinafter called a 'bleed' 10, where a proportion of the contaminated gas mixture is blown off under controlled conditions.

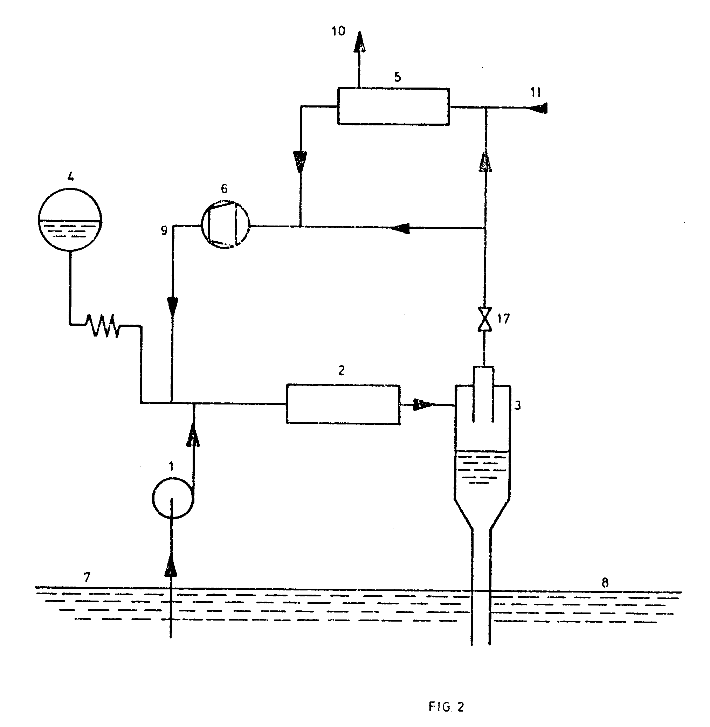

Figure 2 shows a water treatment unit corresponding to Figure 1, but with partial recovery of oxygen from the bleed gas by means of a membrane separator or a so-called pressure swing separator (PSA) where an absorbing agent is utilised to separate oxygen. In this way a greater part of that oxygen which is added from the oxygen tank 4, is utilised.

If desired, the oxygen can also be prepared from air which is led to a pressure swing separator. This will replace the oxygen source 4. The pipeline 11 can then be used as air inlet. This means that a substantially greater and more expensive PSA separator has to be used. Which one of these or other solutions should be selected is, however, primarily a question of costs. Furthermore, to obtain a higher possible super-saturation of water the gas addition can be performed by elevated pressure. A valve 17 is provided to establish such higher pressure. The stream of water can conveniently be recirculated through the treatment unit. This is done by means of the pipeline connection 12, shown on the drawing of Figure 1.

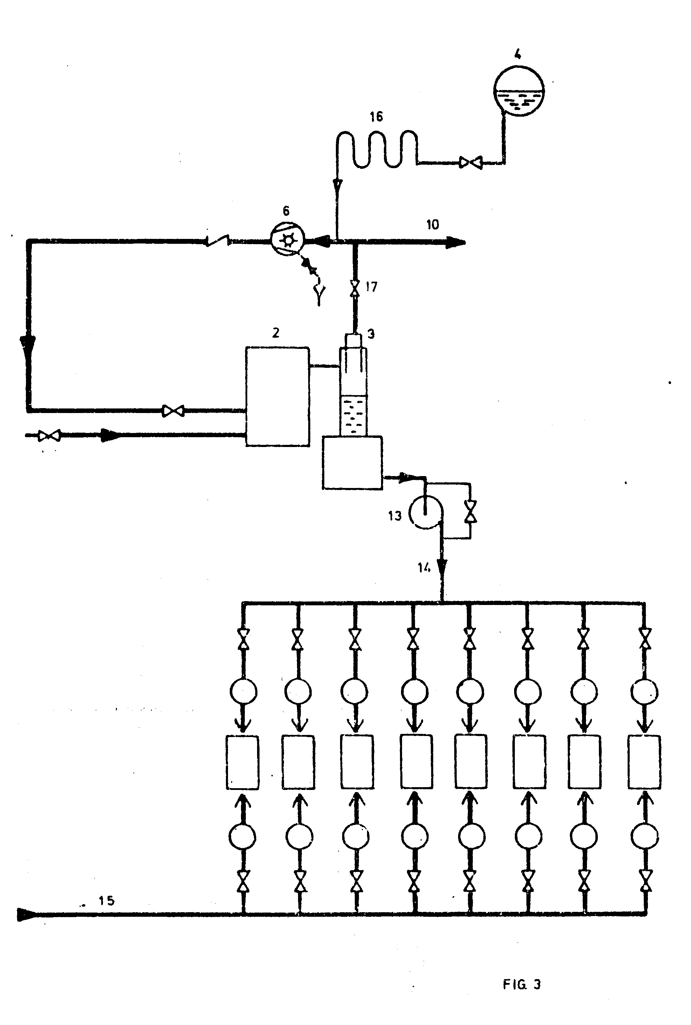

Figure 3 shows an arrangement for supply of oxygen-enriched water to a number of breeding vessels 18-25. This illustrates that the system is well suited for use in the form of a movable central unit which can be mounted on a movable frame or a so-called skid (not shown on the drawing) and transported to the place where it is supposed to be utilised.

Water with normal oxygen content is fed under pressure into the oxygen enrichment unit 2 together with circulating oxygen gas which is provided by means of a compressor 6. The tank 4 with liquid oxygen, supplies gas to the compressor together with recirculated gas from the gas/liquid separator 3. To reduce the nitrogen content, a bleed 10 is provided in close proximity to this gas stream. Water with high content of oxygen and low content of nitrogen is taken from the bottom of the liquid/gas separator 3 and added to a number of breeding vessels by means of a pump and pipline system 13, 14. Furthermore, it is provided with a separate water supply 15 for water with normal oxygen content, in order to make it possible to control the oxygen content and temperature individually for the different vessels.

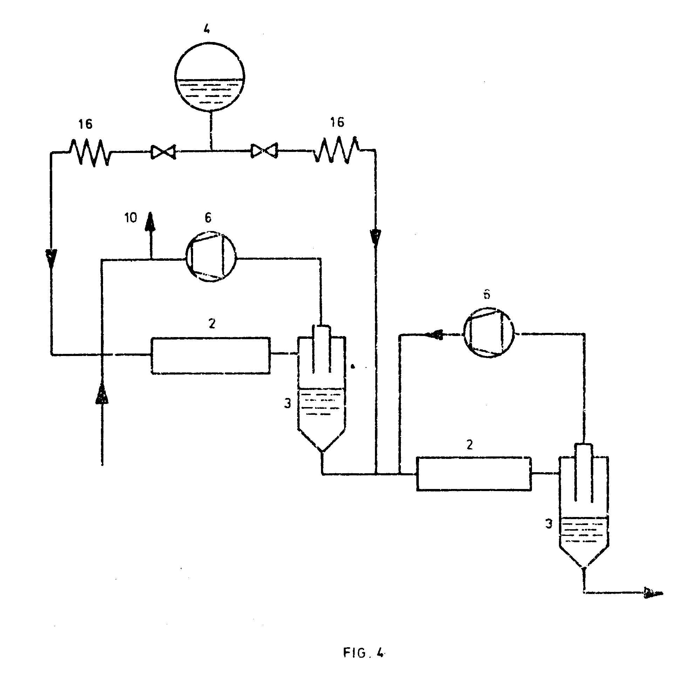

Figure 4 shows a dual-stage system where the first stage is provided with a bleed 10 used to reduce

EP 0 232 607 B1

enriched nitrogen. The second stage is used for the final oxygen enrichment. The drawings are assumed to be self explaining. The different components of the system are given the same reference numbers as previously in connection with the system according to Figure 1-3.

As the examples below for a single-stage and a dual-stage system show, with the dual-stage system having nitrogen reduction limited to the first stage, a substantially improved utilisation of the oxygen available is obtained.

The total amount of gas circulated through the compressor 6 and the enrichment means 2, does not influence the final consumption of oxygen, but is important for creating a turbulent flow in the water/gas treatment zone and thus influences the efficiency of the enrichment means. In the calculation examples below the amounts of gas which are circulated, are therefore not included.

Calculation Example No 1 - One-stage System

a) Water in: 1000 $m^3$/h
$O_2$-content : 7ppm ): 5 $Nm^3$/h
$N_2$-content : 18ppm ): 15 $Nm^3$/h
b) Water out: 1000 $m^3$/h
$O_2$-content : 25ppm ): 18 $Nm^3$/h
$N_2$-content : 10ppm ): 8 $Nm^3$/h
c) Gas composition in the Separator
$O_2$ : 69% (volume)
$N_2$ : 3l% (volume)
d) "Bleed": $N_2$ which is removed: 15-8 = 7 $Nm^3$/h
Total "bleed": 7/0,31 = 22.6 $Nm^3$/h
): hereby $O_2$ (loss): 15.6 $Nm^3$/h
e) Necessary $O_2$-supply from tank:
18 + 15.6 - 5 = 28.6 $Nm^3$/h
f) Conclusions
   1. $O_2$-enrichment of Water: 18-5 = 13$Nm^3$/h
   ): $O_2$-content in Water out: 25 ppm
$O_2$-super saturation: 260%
   2. $N_2$-reduction i Water: 7$Nm^3$/h
   ): $N_2$-saturation: 56%
   3. Utilization of added $O_2$ from tank:

$$\frac{28.6 - 15,6}{28,6} \cdot 100 = 45,4\%$$

Calculation Example No 2 - Dual-stage System

a) Water in: 1000 $m^3$/h
$O_2$-content : 7 ppm ): 5 $Nm^3$/h
$N_2$-content : 18 ppm ): 15 $Nm^3$/h
b) First stage ($N_2$-reduction)
$O_2$ added from tank: 8 $Nm^3$/h
Gas Composition in enrichment means:
$O_2$: 5 + 8 = 13 $Nm^3$/h = 46.4% (volume)
$N_2$: 15 $Nm^3$/h = 53.6% (volume)
"Bleed": $N_2$ which shall be removed: 7 $Nm^3$/h
Total "bleed": 13 $Nm^3$/h
): hereby $O_2$ (loss): 6 $Nm^3$/h
Necessary pressure in separator ca. 0,5 bar abs.
c) Second-stage ($O_2$-enrichment)
Water in: 1000 $m^3$/h
$O_2$-content : 7 $Nm^3$/h

4

N$_2$-content : 8 Nm$^3$/h

O$_2$ added from tank: 18-7 = 11 Nm$^3$/h

Water out: 1000 m$^3$/h

O$_2$-content : 18 Nm$^3$/h

N$_2$-content : 8 Nm$^3$/h

d) Conclusions

O$_2$-enrichment and N$_2$-reduction of water as in calculation Example No. 1.

Total added O$_2$ from tank:

8 + 11 = 19 Nm$^3$/h

Utilised O$_2$ from tank:

$$\frac{19 - 6}{19} = 68.4\%$$

Comment: The difference in efficiency between a dual-stage and a single-stage system is clearly demonstrated. To obtain the stipulated values for oxygen and nitrogen in water, the systems require 28.6 and 19 Nm$^3$O2/h respectively.

The practical, calculated examples which are described above, represent preferred embodiments of the utilisation of the principle of the present invention. The centralised water treatment results in great flexibility. There are no upper limits for the ration of oxygen/water due to the recirculation of the oxygen gas. Furthermore, the water flow can also be recirculated and be given repeated treatment with oxygen. Really high super-saturation values can be obtained thereby. A liquid with very high oxygen content is also very convenient for distribution into a greater volume of water. This is not so easy with a stream of gas forming bubbles in the breeding tank.

Hereby the utilisation of the available breeding volume can be increased at the same time as the oxygen content can be maintained at a high level without a risk of enrichment of nitogen and other gaseous contaminants.

An installation incorporating the water treatment unit is also very flexible and can be used for fresh water which is intended for addition to a pond or it can be used for water which is taken from a pond and returned to the same.

**Claims**

1. A method for the treatment of liquids, especially oxygen enrichment of water, in which gaseous oxygen is added to the water to give a super-saturation of between 120 to at least 250%, the water being treated with circulating gaseous oxygen, a gas mixture comprising an excess portion of the oxygen not enriched into the water and gaseous contaminants released from the water being collected after treatment of the water and being recirculated for treatment of additional water to be enriched is characterised by the steps of simultaneously pumping fresh water and/or recirculated water and an excess of gas consisting substantially or wholly of oxygen through an oxygen enrichment or reactor zone and mixing the water and oxygen therein to form a turbulent foaming gas-liquid flow and thus enriching the water with a portion of the oxygen, pumping the gas-liquid flow from the enrichment zone into a gas-liquid separation zone and therein separating the oxygen enriched water from a gas mixture including an excess portion of the oxygen and gaseous contaminants released from the water, releasing at least a portion of the gaseous contaminants from the gas mixture and recirculating the remaining gas mixture back to the enrichment zone, and, discharging the super-saturated, oxygen-enriched water from the separation zone to a position of utilisation in a breeding vessel or pond.

2. A method according to Claim 1, characterised in that, after separation from the water, pressure of the gas mixture is increased whereby a higher degree of super saturation is obtained.

3. A method as claimed in claim 1 or 2 wherein the gaseous contaminants, or a portion thereof, are released by bleeding off a portion of the gas mixture prior to recirculation thereof.

4. A method as claimed in claim 1 or claim 2 wherein the gaseous contaminants, or a portion thereof, are released by passing the gas mixtrue into means for separating at least a portion of the gaseous contaminants from the gas mixture.

5. A method as claimed in any preceding claim wherein the enrichment zone and separator zones are maintained at a pressure of 0.3 to 1 bar abs. and nitrogen is thus removed from the water to be enriched with oxygen.

6. A method as claimed in any preceding claim wherein prior to discharge of the oxygen-enriched water, it is pumped simultaneously with an excess of oxygen into a second oxygen enrichment zone and the water and oxygen are mixed therein to form a second turbulent foaming gas-liquid flow to further enrich the water with oxygen, the second gas-liquid flow then being pumped from the second enrichment zone into a second gas-liquid separator zone in which the oxygen enriched water is separated from a second gas mixture including an excess portion of the oxygen not enriched into the water and gaseous contaminants released from the water, the second gas mixture being recirculated back to the second enrichment zone.

7. A method as claimed in claim 6 wherein the pressure in the second mixing zone and the second separator zone is maintained at above 1.0 bar abs. so that nitrogen is not removed from the water during the second enrichment of the water.

8. Apparatus for enriching water with oxygen to increase the oxygen content of the water to a super-saturation of at least 120 - 250% comprising means for mixing a gas consisting substantially or wholly of oxygen and water to be enriched, means for collecting a gas mixture comprising excess oxygen not enriched into the water and gaseous contaminants released from the water and means for recirculating the gas mixture for mixture with additional water to be enriched, characterised in that the mixing means comprises means (1) for simultaneously pumping water to be enriched with oxygen and an excess of oxygen into an oxygen enrichment means (2) and therein mixing the water and oxygen to form a turbulent, foaming gas-liquid flow and thus enrich the water, gas-liquid separator means (3) for receiving the gas-liquid flow from the mixing means and for separating the oxygen enriched water from the gas mixture, means (10) for releasing at least a portion of the gaseous contaminants from the gas mixture and means for discharging the oxygen enriched water from the separator means to a position of utilization.

9. Apparatus as claimed in claim 8, further comprising means (17) for elevating the pressure of the gas mixture and thereby increasing the level of super saturation of oxygen into the water.

10. Apparatus as claimed in either claim 8 or 9 wherein the releasing means (10) comprises a bleed means for bleeding off a portion of the gas mixture prior to recirculation thereof back to enrichment means (2).

11. Apparatus as claimed in either claim 8 or 9 wherein the releasing means (10) comprises means for separating at least a portion of the gaseous contaminants from the remaining gas mixture.

12. Apparatus as claimed in claim 11, wherein the separating means comprises a membrane separator.

13. An apparatus as claimed in any one of claims 8 to 12 wherein the discharging means comprises pump means and pipeline(s) for forwarding the oxygen enriched water from the gas-liquid separator means to fish breeding vessel(s) or pond(s).

14. Apparatus as claimed in any one of Claims 8 to 13 wherein the recirculating means comprises a return pipeline extending from the gas-liquid separator means (3) to the enrichment means (2) and a compressor in the pipeline for pressurising the recirculated gas mixture.

**Revendications**

1. Une méthode pour le traitement des liquides, surtout l'enrichissement en oxygène de l'eau, conformément à l'invention par laquelle de l'oxygène gazeux est ajouté à l'eau pour apporter une supersaturation de entre 120 à au moins 250%, l'eau étant traitée avec de l'oxygène gazeux circulé, un mélange de gaz comprenant une partie excédante de l'oxygène non enrichi dans l'eau et des contaminants gazeux dégagés de l'eau recueillie après traitement de l'eau et recirculée pour le traitement d'eau supplémentaire devant être enrichie se caractérise par les étapes qui consistent à pomper simultanément de l'eau douce et/ou de l'eau recirculée et un surplus de gaz se composant substantiellement ou entièrement d'oxygène par une zone d'enrichissement d'oxygène ou de réaction et à y mélanger l'eau et l'oxygène pour former un écoulement gaz-liquide moussant turbulent et donc enrichir l'eau avec une partie de l'oxygène, à pomper l'écoulement gaz-liquide de la zone d'enrichissement vers une zone de séparation gaz-liquide et d'y séparer l'eau enrichie d'oxygène du mélange de gaz y compris la partie excédante d'oxygène et de contaminants gazeux dégagés de l'eau, à dégager au moins une partie des contaminants gazeux du mélange de gaz et à recirculer le mélange de gaz restant vers la zone d'enrichissement, et, à décharger l'eau supersaturée enrichie d'oxygène de la zone de séparation vers un lieu d'utilisation dans un bassin de production ou un étang.

2. Une méthode comme il est revendiqué d'après la Revendication 1, caractérisée en ce qu'après séparation de l'eau la pression du mélange de gaz augmente d'où un plus haut degré de supersaturation est obtenu.

3. Une méthode comme il est revendiqué d'après la revendication 1 ou 2 où les contaminants gazeux, ou une partie de ceux-ci, sont dégagés en purgeant une partie du mélange de gaz avant la recirculation de celuici.

4. Une méthode comme il est revendiqué d'après la revendication 1 ou la revendication 2 où les contaminants gazeux, ou une partie de ceux-ci, sont dégagés en faisant passer le mélange de gaz dans le moyen pour séparer au moins une partie des contaminants gazeux du mélange de gaz.

5. Une méthode comme il est revendiqué dans les revendications précédentes où la zone d'enrichissement et les zones de séparation sont maintenues à une pression de 0,3 à 1 bar abs. et ainsi l'azote est dégagé de l'eau devant être enrichie d'oxygène.

6. Une méthode comme il est revendiqué dans les revendications précédentes où avant de décharger l'eau enrichie d'oxygène, elle est pompée simultanément avec un excès d'oxygène dans une seconde zone d'enrichissement d'oxygène et l'eau et l'oxygène y sont mélangés pour former un second écoulement gaz-liquide moussant turbulent pour enrichir plus encore l'eau avec de l'oxygène, le second écoulement gaz-liquide étant alors pompe de la seconde zone d'enrichissement vers une deuxième zone de séparation gaz-liquide où l'eau enrichie d'oxygène est séparée d'un second mélange de gaz y compris une partie excédante de l'oxygène non enrichi dans l'eau et des contaminants gazeux dégagés de l'eau, le second mélange de gaz étant recirculé dans la seconde zone d'enrichissement.

7. Une méthode comme il est revendiqué d'après la revendication 6 où la pression dans la seconde zone de mélange et la seconde zone de séparation est maintenue au-dessus de 1,0 bar abs. afin que l'azote ne soit pas dégagé de l'eau pendant le second enrichissement de l'eau.

8. Un appareil pour enrichir l'eau avec de l'oxygène pour augmenter le contenu d'oxygène de l'eau jusqu'à une supersaturation d'au moins 120 - 250% qui comprend un moyen de mélanger un gaz se composant substantiellement ou entièrement d'oxygène et d'eau devant être enrichie, un moyen de recueillir un mélange de gaz comprenant de l'oxygène excédant non enrichi dans l'eau et des contaminants gazeux dégagés de l'eau et un moyen de recirculer le mélange de gaz pour mélange avec de l'eau supplémentaire devant être enrichie, caractérisé en ce que le moyen mélangeur comprend un moyen (1) de pomper simultanément l'eau devant être enrichie à l'oxygène et un excès d'oxygène dans un moyen (2) d'enrichissement à l'oxygène et d'y mélanger l'eau et l'oxygène pour former un écoulement gaz-liquide moussant turbulent et donc enrichir l'eau, un moyen (3) de séparation du gaz-liquide pour recueillir l'écoulement gaz-liquide du moyen mélangeur et pour séparer l'eau enrichie d'oxygène du mélange de gaz, un moyen (10) de dégager au moins une partie des contaminants gazeux du mélange de gaz et un moyen de décharger l'eau enrichie d'oxygène du moyen de séparation vers un lieu d'utilisation.

9. Appareil comme il est revendiqué dans la revendication 8, comprenant aussi un moyen (17) d'élever la pression du mélange de gaz et ainsi d'élever le niveau de supersaturation d'oxygène dans l'eau.

10. Appareil comme il est revendiqué dans la revendication 8 ou 9 où le moyen de dégagement (10) comprend une purge pour purger une partie du mélange de gaz avant de le recirculer dans le moyen d'enrichissement (2).

11. Appareil comme il est revendiqué dans la revendication 8 ou 9 où le moyen de dégagement (10) comprend un moyen pour séparer au moins une partie des contaminants gazeux du mélange de gaz restant.

12. Appareil comme il est revendiqué dans la revendication 11 où le moyen de séparation comprend un séparateur à diaphragmes.

13. Appareil comme il est revendiqué dans les revendications 8 à 12 où le moyen de décharge comprend une pompe et conduite(s) pour faire avancer l'eau enrichie d'oxygène du moyen de séparation gaz-liquide vers les bassins ou étangs de pisciculture.

14. Appareil comme il est revendiqué dans les Revendications 8 à 13 où le moyen de recirculation comprend une conduite de retour allant du moyen de séparation gaz-liquide (3) au moyen d'enrichissement (2) et un compresseur sur la conduite pour pressuriser le mélange de gaz recirculé.

**Patentansprüche**

1. Verfahren zur Behandlung von Flüssigkeit, besonders Sauerstoffanreicherung von Wasser, worin dem Wasser gasförmiger Sauerstoff zugegeben wird, um eine Übersättigung von zwischen 120 bis wenigstens 250% zu liefern, wobei das Wasser mit umlaufendem gasförmigem Sauerstoff behandelt wird, wobei eine Gasmischung, die einen überschlüssigen Teil des nicht in das Wasser angereicherten Sauerstoffs und von dem Wasser freigesetzte gasförmige Verunreinigungen umfasst, nach der Behandlung des Wassers gesammelt wird, und zur Behandlung von zusätzlichem Wasser, das angereichert werden soll, zurückgeführt wird, gekennzeichnet durch die Schritte, gleichzeitig frisches Wasser und/oder zurückgeführtes Wasser und einen Gasüberschuss, der im wesentlichen oder ganz aus Sauerstoff besteht, durch eine Sauerstoffanreicherungs- oder Reaktorzone zu pumpen, und das Wasser und den Sauerstoff darin zu mischen, um einen turbulenten schäumenden Gas/Flüssigkeitsstrom zu bilden, und dadurch das Wasser mit einem Teil des Sauerstoffs anzureichern, den Gas/Flüssigkeitsstrom von der Anreicherungszone in eine Gas/Flüssigkeitsabscheidezone zu pumpen, und darin das mit Sauerstoff angereicherte Wasser von einer Gasmischung, die einen überschüssigen Teil des Sauerstoffs und von dem Wasser freigesetzte gasförmige Verunreinigungen einschliesst, abzuscheiden, wenigstens einen Teil der gasförmigen Verunreinigungen von der Gasmischung freizusetzen, und die verbleibende Gasmischung zur Anreicherungszone zurückzuführen, und das übersättigte, mit Sauerstoff angereicherte Wasser von der Abscheidezone zu einer Verwertungsstelle in einem Brutgefäss oder einem Teich abzuführen.

2. Verfahren nach Anspruch 1, dadurch gekennzeichnet, dass der Druck der Gasmischung nach der Abscheidung von dem Wasser erhöht wird, wobei ein höherer Grad von übersättigung erhalten wird.

3. Verfahren nach Anspruch 1 oder 2, worin die gasförmigen Verunreinigungen oder ein Teil davon dadurch freigesetzt werden, indem ein Teil der Gasmischung vor ihrer Rückführung entlüftet wird.

4. Verfahren nach Anspruch 1 oder 2, worin die gasförmigen Verunreinigungen oder ein Teil davon dadurch freigesetzt werden, indem die Gasmischung in ein Mittel gebracht wird, um wenigstens ein Teil der gasförmigen Verunreinigungen von der Gasmischung abzuscheiden.

5. Verfahren nach einem der vorhergehenden Ansprüche, worin die Anreicherungszone und die Abscheidezonen bei einem Druck von 0,3 bis 1 bar abs. gehalten werden, und somit Stickstoff von dem Wasser entfernt wird, um mit Sauerstoff angereichert zu werden.

6. Verfahren nach einem der vorhergehenden Ansprüche, worin das mit Sauerstoff angereicherte Wasser vor seiner Abfuhr gleichzeitig mit einem Überschuss von Sauerstoff in eine zweite Sauerstoffanreicherungszone gepumpt wird, und das Wasser und der Sauerstoff darin gemischt werden, um einen zweiten turbulenten schäumenden Gas/Flüssigkeitsstrom zu bilden, um das Wasser weiterhin mit Sauerstoff anzureichern, wobei der zweite Gas/Flüssigkeitsstrom dann von der zweiten Anreicherungszone in eine zweite Gas/Flüssigkeitsabscheidezone gepumpt wird, in der das mit Sauerstoff angereicherte Wasser von einer zweiten Gasmischung, die einen überschlüssigen Teil des nicht in das Wasser angereicherten Sauerstoffs und gasförmige Verunreinigungen, die von dem Wasser freigesetzt werden, einschliesst, getrennt wird, wobei die zweite Gasmischung zur zweiten Anreicherungszone zurückgeführt wird.

7. Verfahren nach Anspruch 6, worin der Druck in der zweiten Mischungszone und der zweiten Abscheidezone bei über 1,0 bar abs. gehalten wird, so dass Stickstoff während der zweiten Anreicherung des Wassers nicht aus dem Wasser entfernt wird.

8. Vorrichtung zur Anreicherung von Wasser mit Sauerstoff, um den Sauerstoffgehalt des Wassers auf eine Übersätigung von wenigstens 120 - 250% zu erhöhen, die ein Mittel umfasst, um ein Gas zu mischen, das im wesentlichen oder ganz aus Sauerstoff und Wasser, das angereichert werden soll, besteht, ein Mittel, um eine Gasmischung zu sammeln, die überschüssigen Sauerstoff, der nicht in das Wasser angereichert ist, und von dem Wasser freigesetzte gasförmige Verunreinigungen umfasst, und ein Mittel, um die Gasmischung zur Mischung mit zusätzlichem Wasser, das angereichert werden soll, zurückzuführen, dadurch gekennzeichnet, dass das Mischungsmittel ein Mittel (1) umfasst, um gleichzeitig Wasser, das mit Sauerstoff angereichert werden soll, und einen Überschuss von Sauerstoff in ein Sauerstoffanreicherungsmittel (2) zu pumpen, und das Wasser und den Sauerstoff darin zu mischen, um einen turbulenten, schäumenden Gas/Flüssigkeitsstrom zu bilden, und dadurch das Wasser anzureichern, ein Gas/Flüssigkeitsabscheidemittel (3), um den Gas/Flüssigkeitsstrom von dem Mischungsmittel aufzunehmen, und um das mit Sauerstoff angereicherte Wasser von der Gasmischung abzuscheiden, und ein Mittel, um das mit Sauerstoff angereicherte Wasser von dem Abscheidemittel zu einer Verwertungsstelle abzuführen.

9. Vorrichtung nach Anspruch 8, die weiterhin ein Mittel (17) umfasst, um den Druck der Gasmischung zu erhöhen, und dabei den Stand der Übersättigung von Sauerstoff in dem Wasser zu erhöhen.

10. Vorrichtung nach entweder Anspruch 8 oder 9, worin das Freisetzungsmittel (10) ein Entlüftungsmittel umfasst, um einen Teil der Gasmischung vor ihrer Rückführung zum Anreicherungsmittel (2) zu entlüften.

11. Vorrichtung nach entweder Anspruch 8 oder 9, worin das Freisetzungsmittel (10) ein Mittel zum Abscheiden wenigstens eines Teils der gasförmigen Verunreinigungen von der verbleibenden Gasmischung umfasst.

12. Vorrichtung nach Anspruch 11, worin das Abscheidemittel einen Membranabscheider umfasst.

13. Vorrichtung nach einem der Ansprüche 8 bis 12, worin das Abführmittel ein Pumpmittel umfasst und Rohrleitung(en), um das mit Sauerstoff angereicherte Wasser von dem Gas/ Flüssigkeitsabscheidemittel an Fischbrutgefäss(e) oder Teich(e) weiterzugeben.

14. Vorrichtung nach einem der Ansprüche 8 bis 13, worin das Rückführungsmittel eine Rückkehrrohrleitung umfasst, die sich von dem Gas/Flüssigkeitsabscheidemittel (3) zu dem Anreicherungsmittel (2) erstreckt, und einen Verdichter in der Rohrleitung, um die zurückgeführte Gasmischung unter Druck zu setzen.

FIG 1

FIG. 2

EP 0 232 607 B1

FIG. 3

FIG. 4